# EUROPEAN PATENT SPECIFICATION

(11) **EP 4 253 752 B1**
(45) Date of publication and mention of the grant of the patent: **14.01.2026**
(21) Application number: 23155792.7
(22) Date of filing: 09.02.2023
(51) Int. Cl.: F02M 26/41, F02M 26/12, F02M 26/23, F02M 26/16

(54) **INTERNAL COMBUSTION ENGINE**
BRENNKRAFTMASCHINE
MOTEUR À COMBUSTION INTERNE

(30) Priority: 31.03.2022 JP 2022059893
(43) Date of publication of application: 04.10.2023
(73) Proprietor: Suzuki Motor Corporation, Hamamatsu-shi, Shizuoka 432-8611 (JP)
(72) Inventor: YAMAMOTO, Kanji, Hamamatsu-shi, 432-8611 (JP)
(74) Representative: Plasseraud IP

(56) References cited:
- EP-A1- 2 565 438
- EP-A1- 3 085 943
- CN-A- 110 159 449
- DE-A1- 102005 049 462
- US-A1- 2012 234 276
- US-A1- 2019 383 245
- US-A1- 2020 102 916
- US-A1- 2020 378 347
- US-B2- 11 002 174
- US-B2- 11 053 894
- US-B2- 9 051 904

## Description

### [Technical Field]

The present invention relates to an internal combustion engine.

### [Background Art]

There has been known a cylinder head having an EGR (exhaust gas recirculation) passage (see Patent Literature 1 or Patent Literature 2). Other EGR systems are known from US 2020/378347 A1, EP 2 565 438 A1, US 2012/234276 A1, CN 110 159 449 A.

The EGR passage is provided at an end portion in a longitudinal direction (cylinder bank direction) of the cylinder head and is surrounded by a water jacket through which coolant flows.

A coolant outlet for discharging coolant from the water jacket is formed at the other end portion in the longitudinal direction (cylinder bank direction) of the cylinder head, and a coolant pipe is connected to the coolant outlet. With this configuration, EGR gas which flows through the EGR passage can be cooled by coolant.

### [Citation List]

### [Patent Literature]

[Patent Literature 1] JP 6252352 B2
[Patent Literature 2] US 2020/378347 A1

### [Summary of Invention]

### [Technical Problem]

In such a conventional cylinder head, however, the EGR passage is installed at the end portion in the longitudinal direction of the cylinder head so as to be surrounded by the water jacket.

For the above-described reason, the coolant outlet of the cylinder head needs to be provided on a side closer to the outside than the EGR passage is. This causes the cylinder head to increase in length in the longitudinal direction and increase in size.

Since the coolant pipe is attached to the coolant outlet, increase in size of the cylinder head shortens a distance between the coolant pipe and components peripheral to the cylinder head. This may reduce the degree of freedom in layout of the coolant pipe.

The present invention has been made in view of the above-described circumstances, and an object thereof is to provide an internal combustion engine capable of achieving reduction in size of a cylinder head and enhancing the degree of freedom in layout of components to be attached to a coolant discharge port.

### [Solution to Problem]

There is provided an internal combustion engine according to claim 1.

### [Advantageous Effects of Invention]

According to the present invention described above, it is possible to achieve reduction in size of the cylinder head and enhance the degree of freedom in layout of components to be attached to the coolant discharge port.

### [Brief Description of Drawings]

Figure 1 is a left side view of an internal combustion engine according to an embodiment of the present invention.
Figure 2 is a front view of a cylinder head and a cylinder head cover of the internal combustion engine according to the embodiment of the present invention.
Figure 3 is a left side view of the cylinder head and the cylinder head cover of the internal combustion engine according to the embodiment of the present invention.
Figure 4 is a plan view of the internal combustion engine according to the embodiment of the present invention and shows a state where the cylinder head cover is removed.
Figure 5 is a plan view of an EGR housing portion of the internal combustion engine according to the embodiment of the present invention.
Figure 6 is a plan view of the EGR housing portion of the internal combustion engine according to the embodiment of the present invention and shows a state where an intake cam angle sensor and an exhaust cam angle sensor are removed.
Figure 7 is a sectional view taken along arrows VII-VII in Figure 5.

### [Description of Embodiment]

An internal combustion engine according to an embodiment of the present invention includes: a cylinder head including a coolant passage through which a coolant flows, an intake side wall with an air inlet to suck in an air, an exhaust side wall with an exhaust outlet through which an exhaust gas is discharged, and a coolant discharge side wall with a coolant outlet to discharge the coolant from the coolant passage, being connected to end portions of both the intake side wall and the exhaust side wall in a cylinder bank direction; a cylinder head cover attached to an upper portion of the cylinder head; and an EGR device to reflux, as an EGR gas, a part of the discharged exhaust gas from the exhaust outlet toward the air inlet, the EGR device including: an EGR passage portion through which the EGR gas flows; an EGR cooler to cool the EGR gas; and an EGR valve to adjust a flow rate of the EGR gas, wherein a part of the EGR passage portion is provided in the cylinder head cover.

With the above-described configuration, the internal combustion engine according to the embodiment of the present invention can achieve reduction in size of the cylinder head and enhance the degree of freedom in layout of components to be attached to the coolant discharge port.

### [Embodiment]

An internal combustion engine according to an embodiment of the present invention will be described below with reference to the drawings.

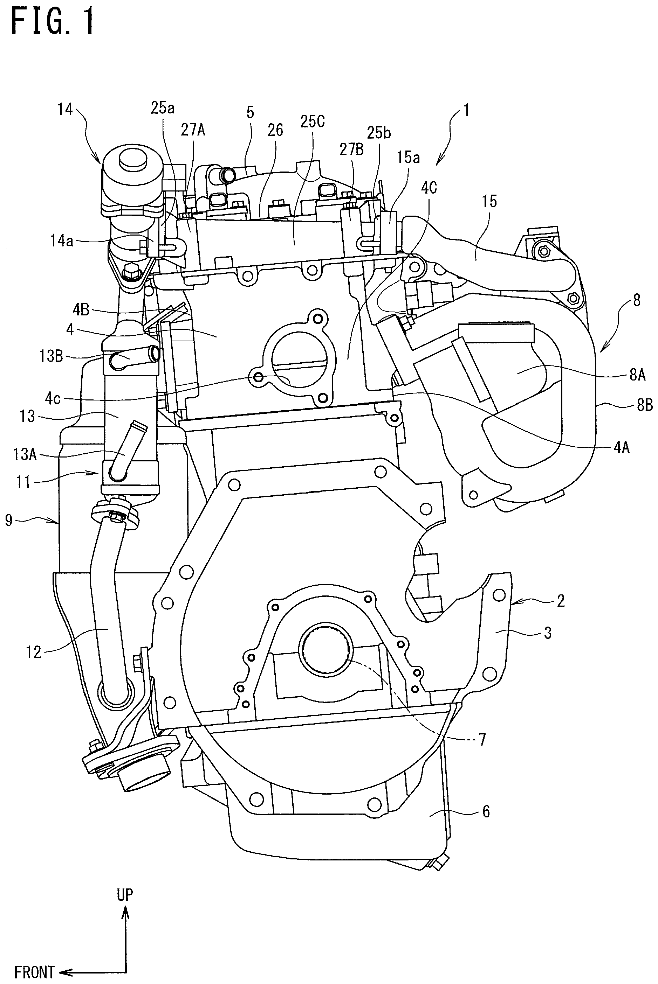

Figures 1 to 7 are views showing the internal combustion engine according to the embodiment of the present invention. In Figures 1 to 7, up-down, front-rear, and left-right directions correspond to those in an internal combustion engine installed in a vehicle. Hereinafter, a vehicle front-rear direction in a vehicle will be referred to simply as front-rear direction; a left-right direction therein (vehicle width direction) will be simply referred to as left-right direction; and an up-down direction therein (vehicle height direction) will be simply referred to as up-down direction.

A configuration will be described first.

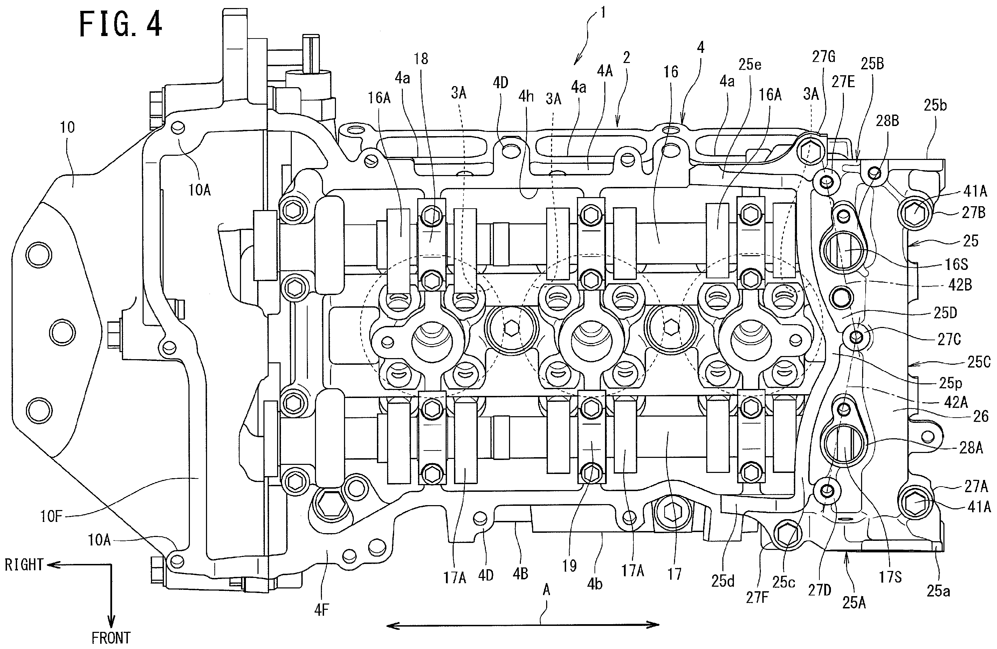

In Figure 1, an engine 1 is provided in an engine room (not shown) of a vehicle. The engine 1 includes an engine body 2 and a chain cover 10 (see Figure 4).

The engine body 2 has a cylinder block 3, a cylinder head 4, a cylinder head cover 5, and an oil pan 6, and the chain cover 10 is connected to a right end portion of the engine body 2. The engine 1 according to the present embodiment constitutes an internal combustion engine.

A plurality of cylinders 3A (indicated by imaginary lines in Figure 4) are provided in the cylinder block 3. The cylinders 3A are arrayed in the vehicle width direction. A direction in which the cylinders 3A are arrayed (the vehicle width direction) will hereinafter be referred to as a cylinder bank direction A.

Note that although the engine 1 according to the present embodiment is composed of a 3-cylinder engine having three cylinders 3A, the number of cylinders is not limited to three.

Respective pistons (not shown) are housed in the cylinders 3A, and each piston is connected to a crankshaft 7 via a connecting rod (not shown) (see Figure 1). The crankshaft 7 has a rotation central axis which extends in the vehicle width direction and rotates about the rotation central axis. The engine 1 according to the present embodiment is a transversely mounted engine with the crankshaft 7 extending in the vehicle width direction, and the vehicle is an FF (front-engine, front-wheel drive) vehicle.

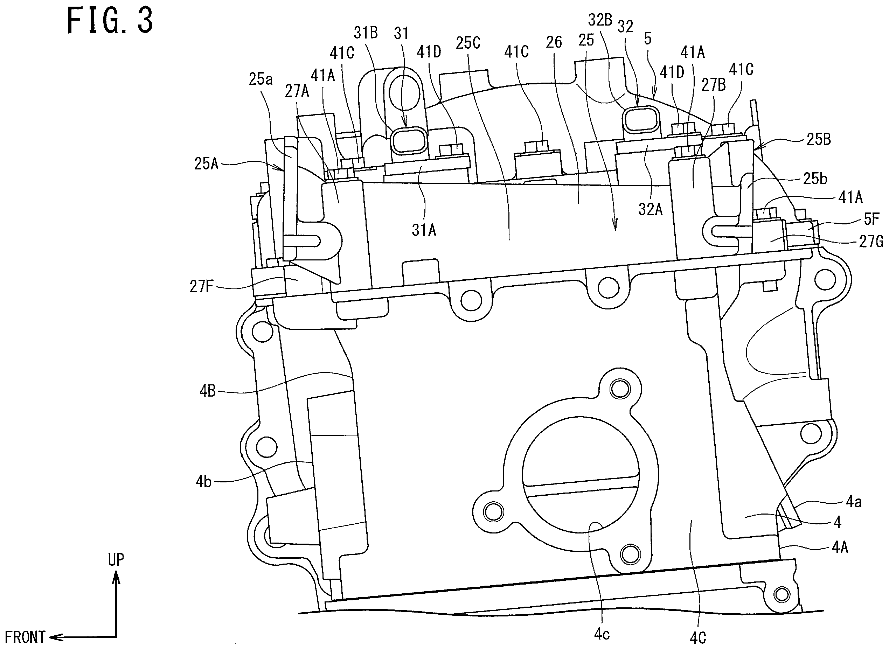

Each piston reciprocates inside the cylinder 3A, thereby rotating the crankshaft 7 via the connecting rod. A plurality of intake ports 4a (see Figure 4) and an exhaust collection portion 4b (see Figure 3) which are not shown are formed in the cylinder head 4.

Each intake port 4a communicates with the cylinder 3A and introduces incoming air into the cylinder 3A. The exhaust collection portion 4b communicates with the respective cylinders 3A through a plurality of exhaust ports (not shown).

In other words, the exhaust ports extend from the respective cylinders 3A to the exhaust collection portion 4b, and the exhaust collection portion 4b collects the exhaust ports.

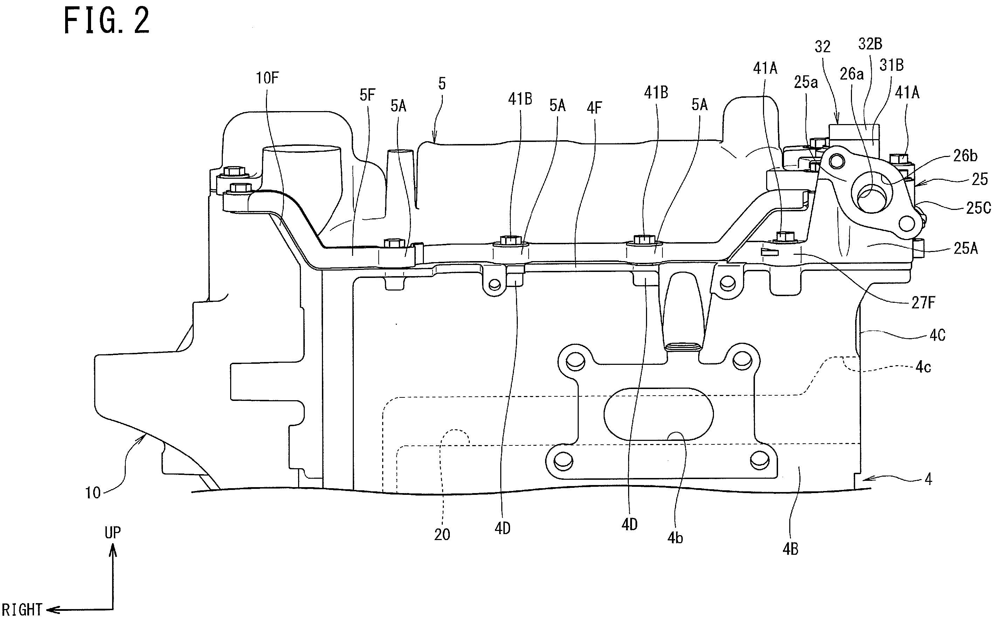

As indicated by imaginary lines in Figure 2, a coolant passage 20 is provided in the cylinder head 4. The coolant passage 20 extends from a right end portion of the cylinder head 4 toward a left end portion.

Coolant is introduced from a coolant passage (not shown) which is formed in the cylinder block 3 into a right end portion of the coolant passage 20. The coolant introduced into the coolant passage 20 flows to the left along the coolant passage 20. For this reason, the cylinder head 4 is cooled by the coolant. The coolant passage 20 according to the present embodiment constitutes a coolant passage.

As shown in Figure 4, the cylinder head 4 has an intake side wall 4A at which the intake ports 4a open and an exhaust side wall 4B which is located on a side (a front side) opposite to the intake side wall 4A and at which the exhaust collection portion 4b opens.

As shown in Figure 3, the cylinder head 4 has a coolant discharge side wall 4C that has a coolant discharge port 4c (hereinafter also referred to as coolant outlet) to discharge coolant from the coolant passage 20, and the coolant discharge side wall 4C is connected to a left end portion (an end portion in the cylinder bank direction A) of the intake side wall 4A and a left end portion (an end portion in the cylinder bank direction A) of the exhaust side wall 4B and extends in the front-rear direction.

A coolant branch unit (not shown) is connected to the coolant outlet 4c, and the coolant branch unit is connected to a radiator (not shown) and a coolant introduction portion 13A (see Figure 1) of an EGR cooler 13 by a branch pipe (not shown).

Coolant which is discharged from the coolant outlet 4c is supplied to the radiator and the coolant introduction portion 13A of the EGR cooler 13 through the coolant branch unit and a coolant pipe.

The intake ports 4a according to the present embodiment constitute an air inlet to suck in an intake air and the exhaust collection portion 4b constitutes an exhaust outlet through which exhaust gas is discharged. That is, the cylinder head 4 has the intake side wall 4A that has the intake ports 4a and the exhaust side wall 4B that has the exhaust collection portion 4b.

As shown in Figure 1, an intake manifold 8 is attached to the intake side wall 4A. The intake manifold 8 has a surge tank 8A and three branch pipes 8B (one of which is shown) corresponding in number to the cylinders 3A. An intake pipe (not shown) is connected to the surge tank 8A via a throttle body (not shown).

Incoming air which is cleaned by an air cleaner (not shown) is introduced into the intake pipe, and the incoming air is introduced into the surge tank 8A through the throttle body.

A throttle valve (not shown) is housed in the throttle body, and the throttle valve adjusts the amount of incoming air to be introduced into the surge tank 8A.

The plurality of branch pipes 8B extend from the surge tank 8A to the respective intake ports 4a and distribute incoming air which is introduced into the surge tank 8A among the respective intake ports 4a.

An exhaust cleaning device 9 is attached to the exhaust side wall 4B. Exhaust gas which is burned inside the cylinder 3A is discharged from the cylinder 3A through the exhaust port and collected in the exhaust collection portion 4b, and is then discharged from the exhaust collection portion 4b into the exhaust cleaning device 9.

The exhaust cleaning device 9 cleans exhaust gas which is discharged from the exhaust collection portion 4b and discharges the exhaust gas into the atmosphere through an exhaust pipe (not shown).

The engine 1 is provided with an EGR (exhaust gas recirculation) device 11. The EGR device 11 includes upstream-side EGR piping 12, the EGR cooler 13, an EGR valve 14, and downstream-side EGR piping 15.

An upstream end of the upstream-side EGR piping 12 is connected to the exhaust cleaning device 9, and a part of exhaust gas is introduced as EGR gas from the exhaust cleaning device 9 into the upstream-side EGR piping 12. The terms upstream and downstream here refer to upstream and downstream in a direction in which incoming air, exhaust gas, or EGR gas flows.

The EGR valve 14 is located downstream of the upstream-side EGR piping 12, and the upstream-side EGR piping 12 is located upstream of the EGR valve 14.

A downstream end of the upstream-side EGR piping 12 is connected to an upstream end of the EGR cooler 13. The EGR cooler 13 has the coolant introduction portion 13A that introduces coolant into the EGR cooler 13 and a coolant discharge portion 13B which discharges the coolant from the EGR cooler 13.

The EGR cooler 13 cools EGR gas which is introduced from the upstream-side EGR piping 12 by heat exchange between the EGR gas and coolant.

A downstream end of the EGR cooler 13 is connected to the EGR valve 14. The EGR valve 14 is connected to an EGR housing portion 25 and adjusts a flow rate of EGR gas which flows through an EGR passage portion 26 (to be described later).

An upstream end of the downstream-side EGR piping 15 is connected to the EGR housing portion 25, and EGR gas which is introduced into the EGR housing portion 25 is discharged into the downstream-side EGR piping 15. A downstream end of the downstream-side EGR piping 15 is connected to the surge tank 8A, and the EGR gas discharged into the downstream-side EGR piping 15 is introduced into the surge tank 8A.

As shown in Figure 4, the cylinder head 4 is provided with an intake camshaft 16 and an exhaust camshaft 17, and the intake camshaft 16 and the exhaust camshaft 17 extend parallel to the cylinder bank direction A. The intake camshaft 16 and the exhaust camshaft 17 are provided with a plurality of intake cams 16A and a plurality of exhaust cams 17A.

The intake cams 16A and the exhaust cams 17A are spaced apart in the cylinder bank direction A, and one pair of intake cams 16A and one pair of exhaust cams 17A are provided for each cylinder 3A.

The intake camshaft 16 and the exhaust camshaft 17 are rotatably supported on the cylinder head 4 by cam caps 18 and 19.

Specifically, journal bearings (not shown) which are opposed to the cam caps 18 and 19 are provided at an upper surface of the cylinder head 4, and the intake camshaft 16 and the exhaust camshaft 17 are rotatably attached to the cylinder head 4 so as to be sandwiched between the journal bearings and the cam caps 18 and 19. The intake camshaft 16 and the exhaust camshaft 17 according to the present embodiment constitute a camshaft.

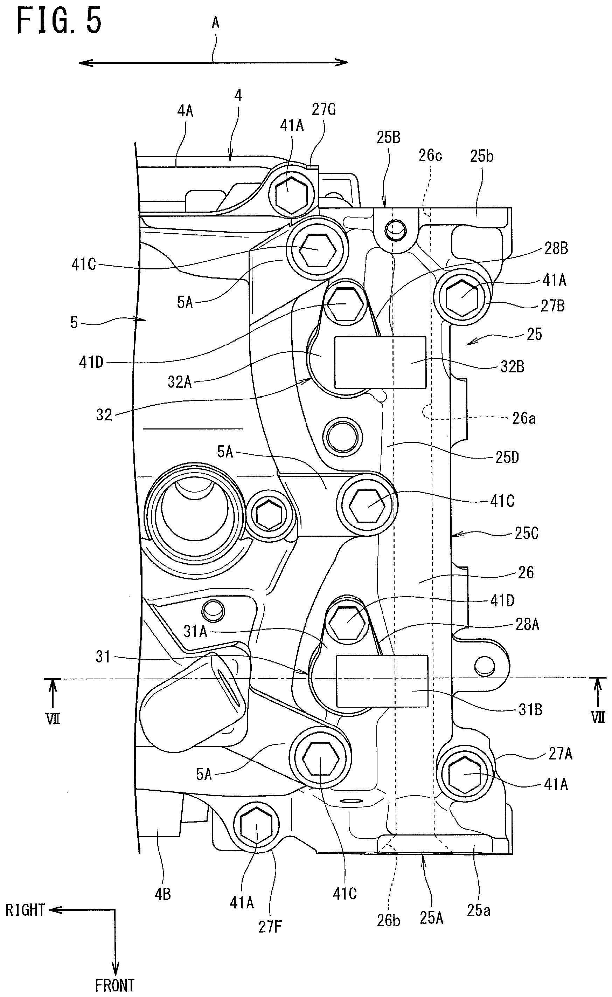

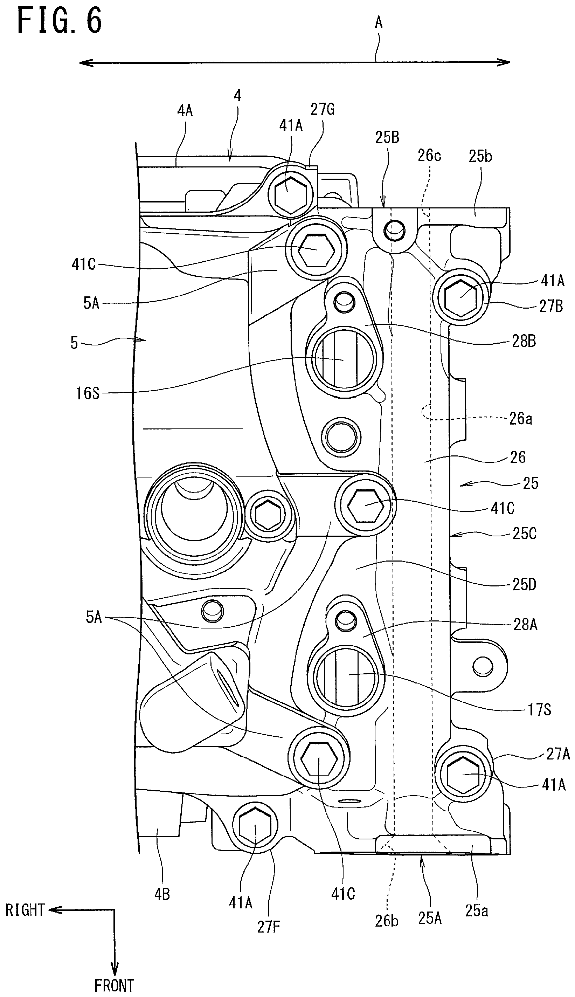

As shown in Figures 5 and 6, the EGR housing portion 25 is provided on an end portion (the left end portion) in the cylinder bank direction A of the cylinder head 4. The EGR housing portion 25 is located on the opposite side of the cylinder head cover 5 from the chain cover 10. That is, the EGR housing portion 25 is adjacent to the cylinder head cover 5 in the cylinder bank direction A.

The cylinder head cover 5 is made of resin, and the EGR housing portion 25 is made of metal, such as an aluminum die-casting.

The EGR housing portion 25 constitutes a first cylinder head cover, and the cylinder head cover 5 constitutes a second cylinder head cover. The EGR housing portion 25 and the cylinder head cover 5 constitute a cylinder head cover.

As shown in Figures 5 and 6, the EGR housing portion 25 has a front wall 25A, a rear wall 25B, a left side wall 25C, and an upper wall 25D.

As shown in Figure 3, the front wall 25A is located on a side closer to the exhaust side wall 4B of the cylinder head 4, and the rear wall 25B is located on a side closer to the intake side wall 4A of the cylinder head 4.

As shown in Figures 5 and 6, the left side wall 25C connects a left end portion (an end portion in the cylinder bank direction A) of the front wall 25A and a left end portion (an end portion in the cylinder bank direction A) of the rear wall 25B, and the upper wall 25D connects an upper end portion of the front wall 25A, an upper end portion of the rear wall 25B, and an upper end portion of the left side wall 25C.

The front wall 25A according to the present embodiment constitutes a first side wall, and the rear wall 25B constitutes a second side wall. The left side wall 25C constitutes a third side wall.

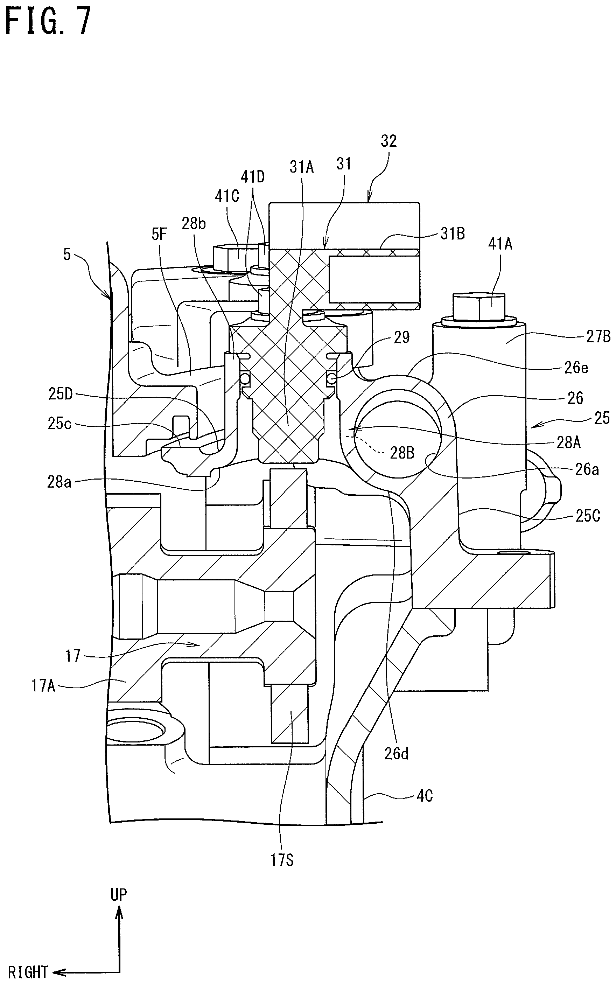

The EGR passage portion 26 is provided in the EGR housing portion 25. The EGR passage portion 26 is formed in a tubular shape, and an EGR passage 26a through which EGR gas flows is formed inside the EGR passage portion 26 (see Figure 7). The upstream-side EGR piping 12, the downstream-side EGR piping 15, and the EGR passage portion 26 according to the present embodiment constitute an EGR passage portion.

The EGR passage portion 26 has an EGR gas inlet 26b and an EGR gas outlet 26c. The EGR gas inlet 26b is provided at the front wall 25A (see Figure 2), and the EGR gas outlet 26c is provided at the rear wall 25B.

The EGR gas inlet 26b is an open end on a front side (upstream side) of the EGR passage 26a, and the EGR gas outlet 26c is an open end on a rear side (downstream side) of the EGR passage 26a.

The EGR passage portion 26 according to the present embodiment extends linearly in a direction (the front-rear direction) horizontally orthogonal to the cylinder bank direction A and is provided outside the coolant discharge side wall 4C (at the left side of the coolant discharge side wall 4C) in the cylinder bank direction A.

That is, the EGR passage portion 26 is located further away from the cylinder head cover 5 in the cylinder bank direction A than the coolant discharge side wall 4C is.

Note that the EGR passage portion 26 is not limited to one extending linearly in the direction horizontally orthogonal to the cylinder bank direction A and may extend obliquely with respect to the cylinder bank direction A. Note that the term horizontal also subsumes a nearly horizontal direction, i.e., a direction slightly inclined with respect to the horizontal.

As shown in Figure 2, a flange portion 25a is provided at the front wall 25A, and the EGR gas inlet 26b is formed inside the flange portion 25a.

As shown in Figure 1, a flange portion 14a of the EGR valve 14 is attached to the flange portion 25a. An EGR gas discharge port (not shown) is provided inside the flange portion 14a, and EGR gas which is discharged from the EGR valve 14 is introduced into the EGR passage 26a through the EGR gas inlet 26b.

As shown in Figures 5 and 6, a flange portion 25b is provided at the rear wall 25B, and the EGR gas outlet 26c is formed inside the flange portion 25b.

As shown in Figure 1, a flange portion 15a of the downstream-side EGR piping 15 is attached to the flange portion 25b. An EGR gas introduction port (not shown) is provided inside the flange portion 15a, and EGR gas which flows through the EGR passage 26a is discharged into the downstream-side EGR piping 15 through the EGR gas introduction port of the flange portion 15a.

In other words, in the engine 1 according to the present embodiment, the EGR housing portion 25 is attached to the left end portion of the cylinder head 4 above the cylinder head 4, and EGR gas is introduced from an exhaust side to an intake side by the EGR passage portion 26 provided in the EGR housing portion 25.

As shown in Figure 4, boss portions 27A and 27B are provided at a front end portion and a rear end portion of the left side wall 25C, and the boss portions 27A and 27B extend along the left side wall 25C in the up-down direction. Boss portions 27F and 27G are provided at the front wall 25A and the rear wall 25B, and the boss portions 27F and 27G extend along the front wall 25A and the rear wall 25B in the up-down direction.

Bolt grooves (not shown) are provided at an upper left end of the cylinder head 4. Bolts 41A are inserted into the boss portions 27A, 27B, 27F, and 27G, and the bolts 41A are screwed into the bolt grooves of the cylinder head 4. In this manner, the EGR housing portion 25 is fixed to the cylinder head 4.

As shown in Figure 4, a flange portion 4F is provided at an upper end portion of the cylinder head 4. The flange portion 4F is provided around the cylinder head 4. The cylinder head 4 opens inside the flange portion 4F. That is, an open portion 4h is formed at an upper portion of the cylinder head 4.

A flange portion 10F is provided at an upper end portion of the chain cover 10, and the flange portion 10F is connected to the flange portion 4F.

A housing-side flange portion 25c, a front-side flange portion 25d, and a rear-side flange portion 25e are provided in the EGR housing portion 25.

As shown in Figure 4, the housing-side flange portion 25c extends from the front wall 25A to the rear wall 25B so as to adjoin the upper wall 25D. That is, the housing-side flange portion 25c is connected to a right end portion (an end portion on a side closer to the chain cover 10) of the upper wall 25D.

A curved portion 25p is provided in the housing-side flange portion 25c, and the curved portion 25p is curved toward the left side wall 25C at a middle portion (a front-rear direction middle portion) in a direction in which the housing-side flange portion 25c extends.

In the upper wall 25D according to the present embodiment, a width in the cylinder bank direction A of the front-rear direction middle portion of the upper wall 25D is smaller than a width in the cylinder bank direction A on a front side of the upper wall 25D and a width in the cylinder bank direction A on a rear side of the upper wall 25D due to the curved portion 25p.

An area of a flat portion of the front-rear direction middle portion of the upper wall 25D is formed smaller than areas on the front side and the rear side of the upper wall 25D.

The front-side flange portion 25d is located at the upper end portion of the front wall 25A and extends from a front end of the housing-side flange portion 25c to the flange portion 4F, and is in contact with the flange portion 4F.

The rear-side flange portion 25e is located at the upper end portion of the rear wall 25B and extends from a rear end of the housing-side flange portion 25c to the flange portion 4F, and is in contact with the flange portion 4F.

As shown in Figures 2 and 3, a flange portion 5F is provided at an outer peripheral lower edge of the cylinder head cover 5, and the flange portion 5F extends along the flange portions 4F, 10F, 25c, 25d, and 25e. That is, the flange portion 5F is opposed to the flange portions 4F, 10F, 25c, 25d, and 25e in the up-down direction.

As shown in Figure 4, a plurality of boss portions 4D are formed at the flange portion 4F, and the boss portions 4D are spaced apart in a direction in which the flange portion 4F extends.

A plurality of boss portions 10A are formed at the flange portion 10F, and the boss portions 10A are spaced apart in a direction in which the flange portion 10F extends (see Figure 4).

Boss portions 27C, 27D, and 27E are provided at the upper wall 25D of the EGR housing portion 25. The boss portions 27C, 27D, and 27E protrude upward from the upper wall 25D and are connected to the housing-side flange portion 25c.

The boss portions 27C, 27D, and 27E are connected to one another by the housing-side flange portion 25c. The housing-side flange portion 25c according to the present embodiment constitutes a flange portion.

As shown in Figure 2, a plurality of boss portions 5A are provided at the flange portion 5F of the cylinder head cover 5, and the boss portions 5A are spaced apart in a direction in which the flange portion 5F extends.

The plurality of boss portions 5A coincide with the boss portions 4D, the boss portions 10A, and the boss portions 27C, 27D, and 27E in the up-down direction. Bolts 41B and 41C are inserted in the plurality of boss portions 5A, the boss portions 4D, the boss portions 10A, and the boss portions 27C, 27D, and 27E, and the cylinder head cover 5 is fixed to the cylinder head 4 by the bolts 41B and 41C.

In other words, the cylinder head cover 5 lies astride and is fixed to the cylinder head 4, the chain cover 10, and the EGR housing portion 25 and covers the open portion 4h of the cylinder head 4.

As shown in Figure 6, attaching boss portions 28A and 28B are provided at the upper wall 25D. As shown in Figure 5, an exhaust cam angle sensor 31 and an intake cam angle sensor 32 are attached to the attaching boss portions 28A and 28B, respectively.

The exhaust cam angle sensor 31 has a sensor body 31A which is fixed to the attaching boss portion 28A by a bolt 41D and a connector 31B which is attached to an upper end portion of the sensor body 31A.

The intake cam angle sensor 32 has a sensor body 32A which is fixed to the attaching boss portion 28B by the bolt 41D and a connector 32B which is attached to an upper end portion of the sensor body 32A. The exhaust cam angle sensor 31 and the intake cam angle sensor 32 have the same configurations and are interchangeable.

As shown in Figure 7, the sensor body 31A of the exhaust cam angle sensor 31 is attached to the attaching boss portion 28A via a sealing member 29, which allows prevention of entry of water and a foreign substance from between the sensor body 31A and the attaching boss portion 28A into the EGR housing portion 25.

Note that a sealing member (not shown) is also interposed between the sensor body 32A of the intake cam angle sensor 32 and the attaching boss portion 28B. The exhaust cam angle sensor 31 and the intake cam angle sensor 32 according to the present embodiment constitute a cam angle sensor.

As shown in Figure 4, an intake-side sensing rotor 16S and an exhaust-side sensing rotor 17S are attached to left end portions of the intake camshaft 16 and the exhaust camshaft 17, and the intake-side sensing rotor 16S and the exhaust-side sensing rotor 17S are located below the upper wall 25D of the EGR housing portion 25.

Projections (not shown) are formed at an outer peripheral portion of each of the intake-side sensing rotor 16S and the exhaust-side sensing rotor 17S. The projections are formed in patterns unique to the respective cylinders 3A.

The exhaust cam angle sensor 31 and the intake cam angle sensor 32 are opposed to the intake-side sensing rotor 16S and the exhaust-side sensing rotor 17S in the up-down direction. The sensor bodies 31A and 32A detect rotational angles (rotational phases) of the intake camshaft 16 and the exhaust camshaft 17 by detecting the projections of the intake-side sensing rotor 16S and the exhaust-side sensing rotor 17S.

The connectors 31B and 32B are connected to a controller via a wire harness (not shown), and pieces of cam angle-related information detected by the sensor bodies 31A and 32A are transmitted from the connectors 31B and 32B to the controller (not shown) through the wire harness.

As shown in Figures 6 and 7, the attaching boss portions 28A and 28B are connected to the EGR passage portion 26.

As shown in Figure 7, lower end portions 28a of the attaching boss portions 28A and 28B are located above a lower end portion 26d of the EGR passage portion 26 and below an upper end portion 26e of the EGR passage portion 26, and upper end portions 28b of the attaching boss portions 28A and 28B are located above the upper end portion 26e of the EGR passage portion 26.

In other words, the upper end portion 26e of the EGR passage portion 26 is located above the lower end portions 28a of the attaching boss portions 28A and 28B.

Although the attaching boss portion 28B is not shown in Figure 7, a positional relationship between the attaching boss portion 28B and the EGR passage portion 26 is the same as a positional relationship between the attaching boss portion 28A and the EGR passage portion 26. The attaching boss portion 28B is located on the far side of (behind) the attaching boss portion 28A in Figure 7.

In Figure 7, the attaching boss portion 28B located on the far side of the attaching boss portion 28A is indicated by an imaginary line.

As shown in Figure 4, the boss portion 27C is installed on a side closer to the EGR passage portion 26 than the boss portions 27D and 27E are and is connected to the EGR passage portion 26.

The boss portion 27D is provided at the upper wall 25D on a side closer to the front wall 25A than the boss portion 27C is and is located on a side closer to the front wall 25A than the attaching boss portion 28A is.

The boss portion 27E is provided at the upper wall 25D on a side closer to the rear wall 25B than the boss portion 27C is and is located on a side closer to the rear wall 25B than the attaching boss portion 28B is.

The boss portion 27C according to the present embodiment constitutes a fastening portion and a first fastening portion, and the boss portion 27D constitutes the fastening portion and a second fastening portion. The boss portion 27E constitutes the fastening portion and a third fastening portion, and the bolts 41C constitute a fastener.

The attaching boss portion 28A is installed between the boss portion 27C and the boss portion 27D. Specifically, the attaching boss portion 28A is installed between the boss portion 27C and the boss portion 27D so as to pass through an imaginary straight line 42A which connects the boss portion 27C and the boss portion 27D. In other words, the attaching boss portion 28A is sandwiched between the boss portion 27C and the boss portion 27D.

The attaching boss portion 28B is installed between the boss portion 27C and the boss portion 27E. Specifically, the attaching boss portion 28B is installed between the boss portion 27C and the boss portion 27E so as to pass through an imaginary straight line 42B which connects the boss portion 27C and the boss portion 27E. In other words, the attaching boss portion 28B is sandwiched between the boss portion 27C and the boss portion 27E.

The attaching boss portion 28A overlaps with the boss portion 27D in the cylinder bank direction A, and the attaching boss portion 28B overlaps with the boss portion 27E in the cylinder bank direction A. That is, the attaching boss portions 28A and 28B, the boss portion 27D, and the boss portion 27E overlap in the cylinder bank direction A.

In other words, the attaching boss portions 28A and 28B, the boss portion 27D, and the boss portion 27E are installed to be lined up in a direction (the front-rear direction) horizontally orthogonal to the cylinder bank direction A.

Effects of the engine 1 according to the present embodiment will be described.

The engine 1 according to the present embodiment includes the cylinder head 4. The cylinder head 4 has the coolant passage 20, through which coolant flows, the intake side wall 4A that has the intake ports 4a, which suck in incoming air, the exhaust side wall 4B that has the exhaust collection portion 4b, through which exhaust gas is discharged, and the coolant discharge side wall 4C that is connected to the left end portion of the intake side wall 4A and the left end portion of the exhaust side wall 4B and has the coolant outlet 4c, through which the coolant is discharged from the coolant passage 20.

The engine 1 includes the cylinder head cover 5 that is attached to the upper portion of the cylinder head 4 and the EGR device 11 that refluxes, as EGR gas, a part of exhaust gas discharged from the exhaust collection portion 4b toward the intake ports 4a.

The EGR device 11 includes the upstream-side EGR piping 12, the EGR cooler 13, the EGR valve 14, the downstream-side EGR piping 15, and the EGR passage portion 26. The EGR passage portion 26 is provided in the EGR housing portion 25.

With the above-described configuration, the coolant outlet 4c of the cylinder head 4 can be installed on a side closer to the inside of the cylinder head 4 than the EGR passage portion 26 is, i.e., on a side closer to the cylinder head cover 5 than the EGR passage portion 26 is. For this reason, a dimension in the cylinder bank direction A of the cylinder head 4 can be shortened, and reduction in size of the cylinder head 4 can be achieved.

The reduction in size of the cylinder head 4 allows increase in a distance between a component peripheral to the engine 1 and the cylinder head 4. For this reason, the degree of freedom in layout of components, such as the coolant pipe connected to the coolant outlet 4c of the cylinder head 4, the coolant branch unit connected to the coolant pipe, and the branch pipe, can be enhanced.

The engine 1 according to the present embodiment has the EGR housing portion 25 that has the EGR passage portion 26 and the cylinder head cover 5 that is adjacent to the EGR housing portion 25 in the cylinder bank direction A.

The EGR housing portion 25 includes the front wall 25A that is located on a side closer to the exhaust side wall 4B, the rear wall 25B that is located on a side closer to the intake side wall 4A, the left side wall 25C that is located on a side closer to the coolant discharge side wall 4C, and the upper wall 25D that is connected to the upper end portion of the front wall 25A, the upper end portion of the rear wall 25B, and the upper end portion of the left side wall 25C.

Additionally, the EGR passage portion 26 has the EGR gas inlet 26b that is provided at the front wall 25A and introduces EGR gas into the EGR passage 26a and the EGR gas outlet 26c that is provided at the rear wall 25B and discharges the EGR gas from the EGR passage 26a.

As described above, the cylinder head cover 5 and the EGR housing portion 25 that are two split components are provided, and the EGR passage portion 26 is provided in the EGR housing portion 25. For this reason, removal of the cylinder head cover 5 from the cylinder head 4 allows external access to the cylinder head 4 in a state where the EGR housing portion 25 is attached to the cylinder head 4.

For the above-described reason, the cylinder head 4 is accessible from the outside without disassembly of the EGR device 11.

As a result, it is possible to enhance work efficiency at the time of doing some work related to the cylinder head 4 (e.g., the work of maintaining the intake camshaft 16 and the exhaust camshaft 17).

In the engine 1 according to the present embodiment, the EGR housing portion 25 is made of metal, and the cylinder head cover 5 is made of resin.

Metal releases heat more easily than resin. Provision of the EGR passage portion 26, through which EGR gas flows, in the EGR housing portion 25 made of metal allows release of heat of EGR gas from the EGR housing portion 25 and promotion of cooling of the EGR gas.

The cylinder head cover 5 is made of resin and is lower in thermal conductivity than metal. For this reason, heat is unlikely to be transmitted from the cylinder head 4 at high temperature to the cylinder head cover 5, and heat is less likely to be transmitted from the cylinder head cover 5 to the EGR housing portion 25.

As a result, it is possible to prevent cooling of EGR gas which flows through the EGR passage portion 26 from being blocked by heat of the cylinder head cover 5 and promote cooling of the EGR gas.

In the engine 1 according to the present embodiment, the EGR passage portion 26 is provided on a side closer to the outside (more to the left) in the cylinder bank direction A than the coolant discharge side wall 4C is.

The coolant branch unit is connected to the coolant outlet 4c of the cylinder head 4, and the branch pipe is connected to the coolant branch unit. If the cylinder head 4 is increased in size, a distance between the cylinder head 4 and a component peripheral to the cylinder head 4 shortens. This adversely affects the layout of components, such as the coolant branch unit connected to the coolant outlet 4c and the branch pipe.

Since the cylinder head cover 5 is provided at the upper portion of the engine 1, even if the EGR passage portion 26 is formed on the side closer to the outside (more to the left) in the cylinder bank direction A than the coolant discharge side wall 4C is, the degree of freedom in layout of components to be connected to the coolant outlet 4c can be inhibited from decreasing.

The EGR passage portion 26 is provided on the side closer to the outside (more to the left) in the cylinder bank direction A than the coolant discharge side wall 4C is. This allows provision of the EGR passage portion 26 at a position to the left of the cylinder head 4.

With the above-described configuration, the EGR passage portion 26 can be held away from the coolant discharge side wall 4C in the cylinder bank direction A, and the EGR passage portion 26 can be inhibited from being affected by heat of the cylinder head 4. This allows promotion of cooling of EGR gas.

### [Reference Signs List]

1: engine (internal combustion engine)
4: cylinder head
4A: intake side wall
4a: intake port (air inlet)
4B: exhaust side wall
4C: coolant discharge side wall
4b: exhaust collection portion (exhaust outlet)
5: cylinder head cover (second cylinder head cover)
11: EGR device
12: upstream-side EGR piping (EGR passage portion)
13: EGR cooler
14: EGR valve
15: downstream-side EGR piping (EGR passage portion)
20: coolant passage
25: EGR housing portion (first cylinder head cover)
25A: front wall (first side wall)
25B: rear wall (second side wall)
25C: left side wall (third side wall)
25D: upper wall
26: EGR passage portion
26b: EGR gas inlet
26c: EGR gas outlet

## Claims

1. An internal combustion engine (1) comprising:
a cylinder head (4) including:
a coolant passage (20) through which a coolant flows;
an intake side wall (4A) with an air inlet (4a) to suck in an air;
an exhaust side wall (4B) with an exhaust outlet (4b) through which an exhaust gas is discharged;
a coolant discharge side wall (4C) with a coolant outlet (4c) to discharge the coolant from the coolant passage (20), being connected to end portions of both the intake side wall (4A) and the exhaust side wall (4B) in a cylinder bank direction (A); and
a flange portion (4F) provided at an upper end portion of the cylinder head (4) and around the cylinder head (4), inside which an open portion (4h) is formed;
a first cylinder head cover (25) attached to an upper portion of the cylinder head (4);
a second cylinder head cover (5) attached to the upper portion of the cylinder head (4) so as to cover the open portion (4h), the second cylinder head cover (5) being adjacent to the first cylinder head cover (25) in the cylinder bank direction (A); and
an EGR device (11) to reflux, as an EGR gas, a part of the discharged exhaust gas from the exhaust outlet (4b) toward the air inlet (4a),
wherein the EGR device (11) includes:
an upstream-side EGR piping (12) provided outside the cylinder head (4), into which the EGR gas is introduced;
an EGR cooler (13) provided outside the cylinder head (4), to cool the EGR gas, the EGR cooler (13) being connected to the upstream-side EGR piping (12) at a downstream end of the upstream-side EGR piping (12);
an EGR valve (14) provided outside the cylinder head (4), to adjust a flow rate of the EGR gas, the EGR valve (14) being connected to the EGR cooler (13) at a downstream end of the EGR cooler (13);
an EGR passage portion (26) connected to the EGR valve (14), into which the adjusted EGR gas flows; and
a downstream-side EGR piping (15) provided outside the cylinder head (4), the downstream-side EGR piping (15) being connected to the EGR passage portion (26) at a downstream end of the EGR passage portion (26), to guide the EGR gas toward the air inlet (4a);
wherein the EGR passage portion (26) is provided in the first cylinder head cover (25).

2. The internal combustion engine (1) as claimed in claim 1, wherein
the first cylinder head cover (25) includes:
a first side wall (25A) located on the same side as the exhaust side wall (4B);
a second side wall (25B) located on the same side as the intake side wall (4A);
a third side wall (25C) located on the same side as the coolant discharge side wall (4C); and
an upper wall (25D) connected to upper end portions of the first to third side walls (25A, 25B, 25C), and
the EGR passage portion (26) includes: an EGR gas inlet (26b) provided at the first side wall (25A), to introduce the EGR gas into the EGR passage portion (26); and an EGR gas outlet (26c) provided at the second side wall (25B), to discharge the EGR gas from the EGR passage portion (26).

3. The internal combustion engine (1) as claimed in claim 2, wherein
the first cylinder head cover (25) is made of metal, and the second cylinder head cover (5) is made of resin.

4. The internal combustion engine (1) as claimed in any one of claims 1 to 3, wherein
the EGR passage portion (26) is located outwardly away from the coolant discharge side wall (4C) in the cylinder bank direction (A).

## Patentansprüche

1. Verbrennungsmotor (1), umfassend:
einen Zylinderkopf (4), umfassend:
einen Kühlmitteldurchgang (20), durch welchen ein Kühlmittel strömt;
eine Einlassseitenwand (4A) mit einem Lufteinlass (4a), um eine Luft anzusaugen;
eine Auspuffseitenwand (4B) mit einem Auspuffauslass (4b), durch welchen ein Auspuffgas abgeführt wird;
eine Kühlmittelabführseitenwand (4C) mit einem Kühlmittelauslass (4c), um das Kühlmittel aus dem Kühlmitteldurchgang (20) abzuführen, welche in einer Zylinderreihenrichtung (A) mit Endabschnitten von sowohl der Einlassseitenwand (4A) als auch der Auspuffseitenwand (4B) verbunden ist; und
einen Flanschabschnitt (4F), welcher an einem oberen Endabschnitt des Zylinderkopfs (4) und um den Zylinderkopf (4) herum bereitgestellt ist, in welchem ein offener Abschnitt (4h) gebildet ist;
eine erste Zylinderkopfabdeckung (25), welche an einem oberen Abschnitt des Zylinderkopfs (4) angebracht ist;
eine zweite Zylinderkopfabdeckung (5), welche an dem oberen Abschnitt des Zylinderkopfs (4) angebracht ist, so dass sie den offenen Abschnitt (4h) abdeckt, wobei die zweite Zylinderkopfabdeckung (5) in der Zylinderreihenrichtung (A) benachbart zu der ersten Zylinderkopfabdeckung (25) ist; und
eine EGR-Vorrichtung (11), um einen Teil des abgeführten Auspuffgases aus dem Auspuffauslass (4B), als ein EGR-Gas, in Richtung des Lufteinlasses (4a) zurückzuführen;
wobei die EGR-Vorrichtung (11) umfasst:
eine stromaufwärtsseitige EGR-Verrohrung (12), welche außerhalb des Zylinderkopfs (4) bereitgestellt ist, in welche das EGR-Gas eingeleitet wird;
einen EGR-Kühler (13), welcher außerhalb des Zylinderkopfs (4) bereitgestellt ist, um das EGR-Gas zu kühlen, wobei der EGR-Kühler (13) mit der stromaufwärtsseitigen EGR-Verrohrung (12) an einem stromabwärts liegenden Ende der stromaufwärtsseitigen EGR-Verrohrung (12) verbunden ist;
ein EGR-Ventil (14), welches außerhalb des Zylinderkopfs (4) bereitgestellt ist, um eine Strömungsrate des EGR-Gases anzupassen, wobei das EGR-Ventil (14) mit dem EGR-Kühler (13) an einem stromabwärts liegenden Ende des EGR-Kühlers (13) verbunden ist;
einen EGR-Durchgangsabschnitt (26), welcher mit dem EGR-Ventil (14) verbunden ist, in welchen das angepasste EGR-Gas strömt; und
eine stromabwärtsseitige EGR-Verrohrung (15), welche außerhalb des Zylinderkopfs (4) bereitgestellt ist, wobei die stromabwärtsseitige EGR-Verrohrung (15) mit dem EGR-Durchgangsabschnitt (26) an einem stromabwärts liegenden Ende des EGR-Durchgangsabschnitts (26) verbunden ist, um das EGR-Gas in Richtung des Lufteinlasses (4a) zu führen;
wobei der EGR-Durchgangsabschnitt (26) in der ersten Zylinderkopfabdeckung (25) bereitgestellt ist.

2. Verbrennungsmotor (1) nach Anspruch 1, wobei die erste Zylinderkopfabdeckung (25) umfasst:
eine erste Seitenwand (25A), welche sich an der gleichen Seite wie die Auspuffseitenwand (4B) befindet;
eine zweite Seitenwand (25B), welche sich an der gleichen Seite wie die Einlassseitenwand (4A) befindet;
eine dritte Seitenwand (25C), welche sich an der gleichen Seite wie die Kühlmittelabführseitenwand (4C) befindet; und
eine obere Wand (25D), welche mit oberen Endabschnitten der ersten bis dritten Seitenwände (25A, 25B, 25C) verbunden ist, und
wobei der EGR-Durchgangsabschnitt (26) umfasst: einen EGR-Gaseinlass (26b), welcher an der ersten Seitenwand (25A) bereitgestellt ist, um das EGR-Gas in den EGR-Durchgangsabschnitt (26) einzuleiten; und einen EGR-Gasauslass (26c), welcher an der zweiten Seitenwand (25B) bereitgestellt ist, um das EGR-Gas aus dem EGR-Durchgangsabschnitt (26) abzuführen.

3. Verbrennungsmotor (1) nach Anspruch 2, wobei
die erste Zylinderkopfabdeckung (25) aus Metall hergestellt ist und die zweite Zylinderkopfabdeckung (5) aus Harz hergestellt ist.

4. Verbrennungsmotor (1) nach einem der Ansprüche 1 bis 3, wobei
sich der EGR-Durchgangsabschnitt (26) in der Zylinderreihenrichtung (A) nach außen entfernt von der Kühlmittelabführseitenwand (4C) befindet.

## Revendications

1. Moteur à combustion interne (1) comprenant :
une culasse (4) comportant :
un passage de liquide de refroidissement (20) à travers lequel circule un liquide de refroidissement ;
une paroi latérale d'admission (4A) avec une entrée d'air (4a) pour aspirer de l'air ;
une paroi latérale d'échappement (4B) avec une sortie d'échappement (4b) par laquelle un gaz d'échappement est évacué ;
une paroi latérale d'évacuation de liquide de refroidissement (4C) avec une sortie de liquide de refroidissement (4c) pour évacuer le liquide de refroidissement du passage de liquide de refroidissement (20), reliée à des portions d'extrémité de à la fois la paroi latérale d'admission (4A) et la paroi latérale d'échappement (4B) dans une direction de banc de cylindres (A) ; et
une portion de bride (4F) prévue au niveau d'une portion d'extrémité supérieure de la culasse (4) et autour de la culasse (4), à l'intérieur de laquelle une portion ouverte (4h) est formée ;
un premier couvre-culasse (25) fixé à une portion supérieure de la culasse (4) ;
un second couvre-culasse (5) fixé à la portion supérieure de la culasse (4) de manière à recouvrir la portion ouverte (4 h), le second couvre-culasse (5) étant adjacent au premier couvre-culasse (25) dans la direction de banc de cylindres (A) ; et
un dispositif EGR (11) pour refluer, sous forme de gaz EGR, une partie des gaz d'échappement évacués de la sortie d'échappement (4b) vers l'entrée d'air (4a),
dans lequel le dispositif EGR (11) comporte :
une tuyauterie EGR côté amont (12) prévue à l'extérieur de la culasse (4), dans laquelle le gaz EGR est introduit ;
un refroidisseur EGR (13) prévu à l'extérieur de la culasse (4), pour refroidir le gaz EGR, le refroidisseur EGR (13) étant relié à la tuyauterie EGR côté amont (12) à une extrémité aval de la tuyauterie EGR côté amont (12) ;
une vanne EGR (14) prévue à l'extérieur de la culasse (4), pour ajuster un débit du gaz EGR, la vanne EGR (14) étant reliée au refroidisseur EGR (13) à une extrémité aval du refroidisseur EGR (13) ;
une portion de passage EGR (26) reliée à la vanne EGR (14), dans laquelle le gaz EGR ajusté circule ; et
une tuyauterie EGR côté aval (15) prévue à l'extérieur de la culasse (4), la tuyauterie EGR côté aval (15) étant reliée à la portion de passage EGR (26) à une extrémité aval de la portion de passage EGR (26), pour guider le gaz EGR vers l'entrée d'air (4a) ;
dans lequel la portion de passage EGR (26) est prévue dans le premier couvre-culasse (25).

2. Moteur à combustion interne (1) selon la revendication 1, dans lequel
le premier couvre-culasse (25) comporte :
une première paroi latérale (25A) située du même côté que la paroi latérale d'échappement (4B) ;
une deuxième paroi latérale (25B) située du même côté que la paroi latérale d'admission (4A) ;
une troisième paroi latérale (25C) située du même côté que la paroi latérale d'évacuation de liquide de refroidissement (4C) ; et
une paroi supérieure (25D) reliée aux portions d'extrémité supérieures des première à troisième parois latérales (25A, 25B, 25C), et
la portion de passage EGR (26) comporte : une entrée de gaz EGR (26b) prévue au niveau de la première paroi latérale (25A), pour introduire le gaz EGR dans la portion de passage EGR (26) ; et une sortie de gaz EGR (26c) prévue au niveau de la deuxième paroi latérale (25B), pour évacuer le gaz EGR de la portion de passage EGR (26).

3. Moteur à combustion interne (1) selon la revendication 2, dans lequel
le premier couvre-culasse (25) est en métal, et le second couvre-culasse (5) est en résine.

4. Moteur à combustion interne (1) selon l'une quelconque des revendications 1 à 3, dans lequel
la portion de passage EGR (26) est située vers l'extérieur à l'écart de la paroi latérale d'évacuation de liquide de refroidissement (4C) dans la direction de banc de cylindres (A).
